# EUROPEAN PATENT APPLICATION

(11) **EP 4 621 975 A1**
(43) Date of publication of application: **24.09.2025**
(21) Application number: 25164530.5
(22) Date of filing: 18.03.2025
(51) Int. Cl.: H01M 50/507, H01M 50/522, H01M 50/526, H01M 50/528

(54) **BATTERY MODULE AND METHOD OF MANUFACTURING THE BATTERY MODULE**

(30) Priority: 19.03.2024 KR 20240037765
(71) Applicant: SAMSUNG SDI CO., LTD., Yongin-si, Gyeonggi-do 17084 (KR)
(72) Inventor: AHN, Jang Gun, 16678 Suwon-si, Gyeonggi-do (KR)
(74) Representative: Gulde & Partner

(57) **Abstract**

A battery module and a method of manufacturing the same, are capable of improving the stability of mechanical and electrical connections. The battery module includes a housing, a battery cell disposed inside the housing, a first bus bar connected to the battery cell and including a first conductive material connected to the first bus bar and a module bus bar. The second bus bar includes a second conductive material that is different than the first conductive material.

## Description

### BACKGROUND

### 1. Field of the Invention

The present disclosure relates to a battery module and a method of manufacturing the same.

### 2. Discussion of Related Art

Unlike a primary battery that cannot be recharged, a secondary battery can be recharged and discharged. A low-capacity secondary battery may be used for portable small-sized electronic devices such as smartphones, feature phones, notebook computers, digital cameras, and camcorders. A high-capacity secondary battery is widely used as a power source for driving a motor and a power storage battery in hybrid vehicles or electric vehicles. A secondary battery includes an electrode assembly including a positive electrode and a negative electrode, a case accommodating the electrode assembly, an electrode terminal connected to the electrode assembly, and the like.

A secondary battery may be used as a battery module or a battery pack formed of a plurality of unit battery cells connected in series and/or parallel to provide high energy density. The battery module or the battery pack may be formed by connecting electrode terminals of a plurality of unit batteries to each other to meet a required amount of power and to implement a high-power secondary battery of, for example, an electric vehicle.

The above-described information is disclosed with respect to the technology that forms the background of the present disclosure and is only intended to improve understanding of the background of the present disclosure. The disclosure may include information that does not constitute the related art.

### SUMMARY OF THE INVENTION

The present disclosure is directed to providing a battery module and a method of manufacturing the battery module, with the battery module being capable of improving the stability of electrical and mechanical connections.

These and other aspects and features of the present disclosure will be described in or will be apparent from the following description of some embodiments of the present disclosure.

According to an aspect of the present disclosure, there is provided a battery module including a housing, a module bus bars, a battery cell disposed inside the housing, a first bus bar connected to the battery cell and including a first conductive material, and a second bus bar connected to the first bus bar and connected to the module bus bar, the second bus bar including a second conductive material different from the first conductive material.

A melting point of the second conductive material may be higher than a melting point of the first conductive material.

A resistivity (e.g. an electrical resistivity) of the second conductive material may be lower than a resistivity (e.g. an electrical resistivity) of the first conductive material.

The first conductive material may include aluminum (Al), and the second conductive material may include copper (Cu).

A first side of the first bus bar may be disposed inside the housing, and the second side of the first bus bar may protrude to the outside of the housing.

The first bus bar may include a first surface in contact with a cell terminal of the battery cell, and a second surface opposite to the first surface, and the second bus bar is stacked on the second surface of the first bus bar.

A sum of a thickness of the first bus bar and a thickness of the second bus bar may be greater than or equal to 1 mm and less than or equal to 3 mm. Preferably, the sum of a thickness of the first bus bar and a thickness of the second bus bar may be 1.00 mm to 3.00 mm, preferably 1.50 mm to 2.50 mm, most preferred 1.80 to 2.40 mm.

A ratio of a thickness of the second bus bar to a sum of a thickness of the first bus bar and the thickness of the second bus bar may be greater than or equal to 0.025 and less than or equal to 0.2. Preferably, the ratio of a thickness of the second bus bar to a sum of a thickness of the first bus bar and the thickness of the second bus bar may be greater than or equal to 0.017 and less than or equal to 0.2.

The thickness of the second bus bar may be greater than or equal to 0.05 mm. Preferably, the thickness of the second bus bar may be 0.05 mm to 0.5 mm.

The first bus bar and the cell terminal may be bonded to each other by laser welding.

The cell terminal may include the first conductive material.

The module bus bar may be in contact with the second bus bar.

The module bus bar may be disposed to face the second surface of the first bus bar with the second bus bar positioned between the module bus bar and the second surface of the first bus bar.

The module bus bar may include the second conductive material.

The battery module may further include a fixing member fixing the module bus bar to the second bus bar.

The fixing member may include a first fixing member passing through the first bus bar, the second bus bar, and the module bus bar, and a second fixing member connected to the first fixing member and configured to press the module bus bar toward the second bus bar.

According to another aspect of the present disclosure, there is provided a method of manufacturing a battery module, the method including disposing a battery cell inside a housing, bringing a first bus bar into contact with a cell terminal of the battery cell, connecting the cell terminal and the first bus bar, bringing a module bus bar into contact with a second bus bar stacked on the first bus bar, and connecting the second bus bar and the module bus bar.

The connecting of the cell terminal and the first bus bar may be performed by laser welding.

In the connecting of the cell terminal and the first bus bar, a laser beam may be irradiated in a direction toward the first bus bar from the second bus bar.

An output of the laser beam may be greater than or equal to 3.4 kW and less than or equal to 4.6 kW. Preferably, the (energy) output of the laser beam may be 3.8 kW to 4.4 kW.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a battery module according to one embodiment of the present disclosure;
FIG. 2 is an exploded perspective view schematically illustrating a configuration of the battery module according to one embodiment of the present disclosure;
FIG. 3 is a perspective view schematically illustrating a configuration of a battery cell according to one embodiment of the present disclosure;
FIG. 4 is a cross-sectional view schematically illustrating a configuration of the battery cell according to one embodiment of the present disclosure;
FIG. 5 is a perspective view schematically illustrating an installation state of a first bus bar and a second bus bar according to one embodiment of the present disclosure;
FIG. 6 is a perspective view schematically illustrating a configuration of the first bus bar and the second bus bar according to one embodiment of the present disclosure;
FIG. 7 is a bottom perspective view schematically illustrating a configuration of the first bus bar and the second bus bar according to one embodiment of the present disclosure;
FIG. 8 is a cross-sectional view schematically illustrating a configuration of the first bus bar and the second bus bar according to one embodiment of the present disclosure;
FIG. 9 is a cross-sectional view schematically illustrating a connection structure between the first bus bar and the battery cell according to one embodiment of the present disclosure;
FIG. 10 is a cross-sectional view schematically illustrating a connection structure of the second bus bar and a module bus bar according to one embodiment of the present disclosure;
FIG. 11 is a flowchart schematically illustrating a sequence of a method of manufacturing a battery module according to one embodiment of the present disclosure;
FIG. 12 is a view schematically illustrating a process of interconnecting a cell terminal and the first bus bar;
FIG. 13 is a view illustrating a welded state of the first bus bar and the cell terminal; and
FIG. 14 is a view schematically illustrating a process of interconnecting the second bus bar and the module bus bar.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

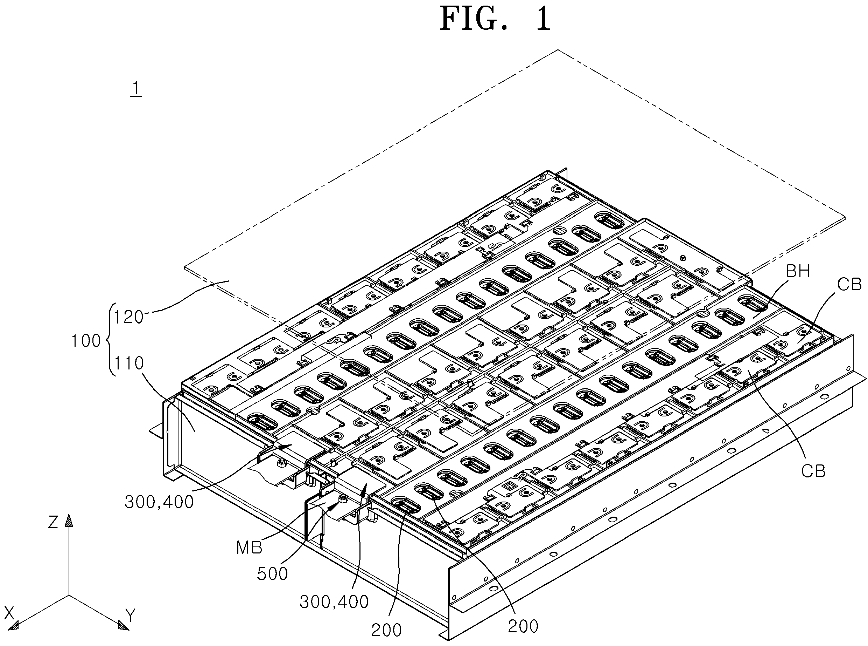

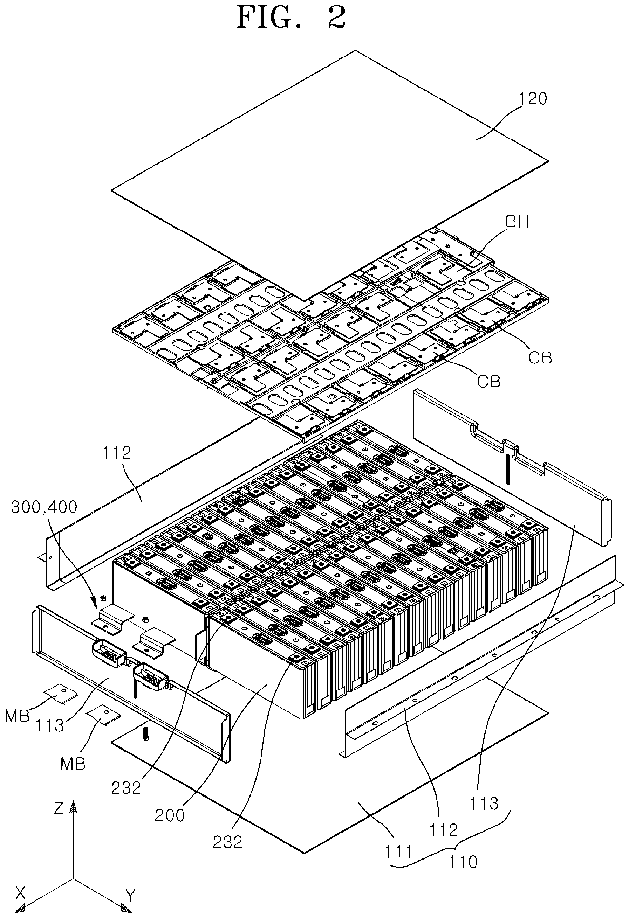

FIG. 1 is a perspective view schematically illustrating a configuration of a battery module according to one embodiment of the present disclosure, and FIG. 2 is an exploded perspective view schematically illustrating a configuration of the battery module according to one embodiment of the present disclosure.

Referring to FIGS. 1 and 2, a battery module 1 according to the present embodiment may include a housing 100, battery cells 200, first bus bars 300, and second bus bars 400.

The housing 100 may support the battery cells 200 and function as a configuration for protecting the battery cells 200 from external impact or foreign substances. The housing 100 may include a housing body 110 and a housing cover 120. The housing body 110 may provide a space for accommodating the battery cells 200 therein. The housing body 110 may be formed to have a box shape, with an empty interior and one side open. The open side of the housing body 110 may be disposed to face upward based on FIG. 2. A cross-sectional shape of the housing body 110 is not limited to a quadrangular shape shown in FIG. 1, and the housing body 110 may be changed in design to have various shapes such as a polygonal shape, a circular shape, and an oval shape.

As an example, the housing body 110 may be configured to include a bottom plate 111, and a pair of side plates 112, and a pair of end plates 113, which are disposed to surround an upper space of the bottom plate 111. The pair of side plates 112 may be disposed to face each other in a width direction of the housing 100 (in a Y-axis direction based on FIG. 1 or 2), and the pair of end plates 113 may be disposed to face each other in a longitudinal direction of the housing 100 (in an X-axis direction based on FIG. 1 or 2).

The housing cover 120 may close an inner space of the housing body 110. As an example, the housing cover 120 may be formed to have a substantially plate shape. The housing cover 120 may be disposed to face the open side of the housing body 110, for example, an upper side surface of the housing body 110. The housing cover 120 may be fixed to the housing body 110 by various types of coupling methods such as bolting, welding, and fitting.

The battery cells 200 may function as a unit structure configured to store and supply power in the battery module. The battery cells 200 may be disposed inside the housing 100.

Hereinafter, a case in which each of the battery cells 200 is a lithium-ion secondary battery and has a prismatic shape will be described as an example. However, the present disclosure is not limited thereto, and the battery cells 200 may be a lithium polymer battery or a cylindrical battery.

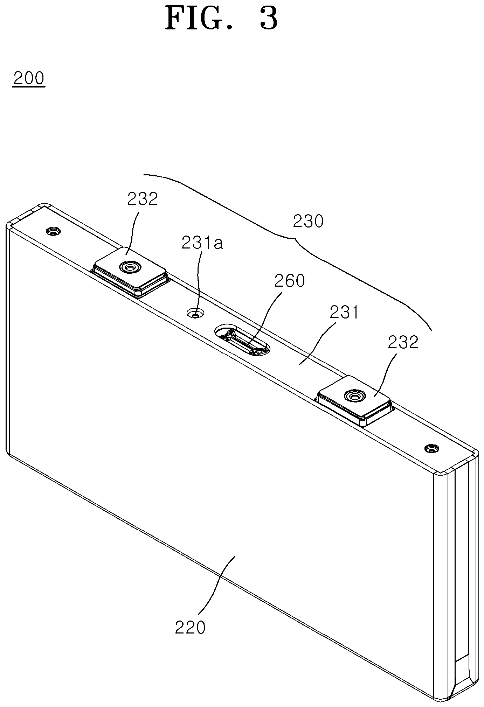

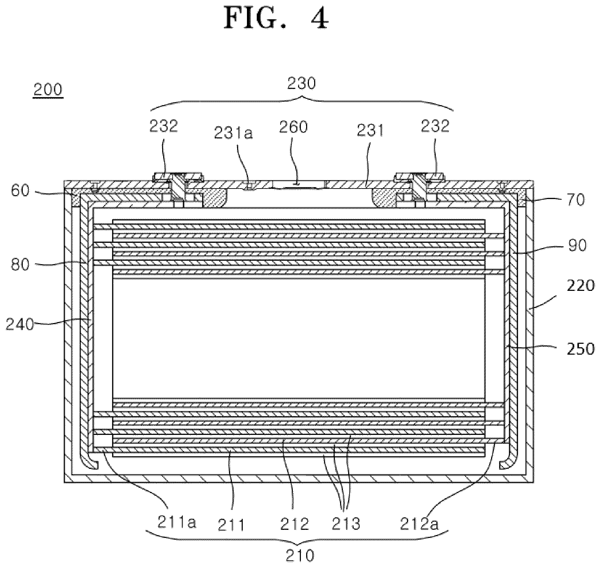

FIG. 3 is a perspective view schematically illustrating a configuration of the battery cell according to one embodiment of the present disclosure, and FIG. 4 is a cross-sectional view schematically illustrating a configuration of the battery cell according to one embodiment of the present disclosure.

Referring to FIGS. 1 to 4, the battery cell 200 may include an electrode assembly 210, a cell case 220, and a cap assembly 230. The electrode assembly 210 may include a positive electrode 211, a negative electrode 212, and a separator 213 disposed between the positive electrode 211 and the negative electrode 212. The positive electrode 211 and the negative electrode 212 may include a coated portion, which is a region in which an active material is applied on a current collector formed of a thin metal foil, and uncoated portions 211a and 212a, which are regions to which the active material is not applied.

The electrode assembly 210 may be wound in a jelly roll shape after the separator 213, which is an insulator, is interposed between the positive electrode 211 and the negative electrode 212. However, the electrode assembly 210 is not limited to this shape, and the electrode assembly 210 may have a stacked structure in which the positive electrode 211 and the negative electrode 212 each composed of a plurality of sheets are alternately stacked with separators 213 interposed therebetween.

The electrode assembly 210 may be formed as a single electrode assembly 210 or of a plurality of electrode assemblies 210.

The cell case 220 may form an overall exterior of the battery cell 200. The cell case 220 may accommodate the electrode assembly 210 therein. As an example, the cell case 220 may be formed to have a rectangular parallelepiped shape of which one surface is open. The open surface of the cell case 220 may be disposed to face the housing cover 120 in a vertical direction in the housing 100. The cell case 220 may include a conductive metal material such as aluminum, an aluminum alloy, or nickel-plated steel.

The cap assembly 230 may be coupled to the cell case 220 and may seal the cell case 220.

The cap assembly 230 may include a cap plate 231. The cap plate 231 may be formed to have the shape of a flat plate that covers an opening of the cell case 220. The cap plate 231 may be coupled to the cell case 220 by various types of coupling methods such as welding-coupling, bolting-coupling, and fitting-coupling. The cap plate 231 may include a conductive material including at least one of aluminum and an aluminum alloy.

An electrolyte inlet 231a in which a sealing cap may be installed may be formed in the cap plate 231.

The cap assembly 230 may further include a cell terminal 232. The cell terminal 232 may be installed such that a lower end portion passes through the cap plate 231 and an upper end portion protrudes outward from the cap plate 231. An outer peripheral surface of an upper pillar of the cell terminal 232 may be threaded and fixed to the cap plate 231 with a nut. However, the present disclosure is not limited thereto, and the cell terminal 232 may be rivet-coupled by having a rivet structure or may be welded to the cap plate 231. The cell terminal 232 may be configured to include a first conductive material having electrical conductivity. As an example, the cell terminal 232 may be formed entirely of the first conductive material, or may be partially formed of the first conductive material. The first conductive material may include at least one of aluminum (Al) and an aluminum alloy.

The cell terminals 232 may be provided in pairs. The pair of cell terminals 232 may be individually connected to the positive electrode 211 and the negative electrode 212 of the electrode assembly 210. Accordingly, the pair of cell terminals 232 may function as positive and negative terminals of the battery cell 200. As an example, the pair of cell terminals 232 may be electrically connected to a positive electrode current collector 240 and a negative electrode current collector 250 that are welded to a positive electrode non-coating portion 211a and a negative electrode non-coating portion 212a, respectively. The pair of cell terminals 232 may be welded to the positive electrode current collector 240 and the negative electrode current collector 250. However, the present disclosure is not limited thereto, and the cell terminals 232 may be formed by being integrally combined with the positive electrode current collector 240 and the negative electrode current collector 250.

The cap assembly 230 may further include a vent 260. The vent 260 may be formed in the cap plate 231. The vent 260 may be opened and closed in conjunction with a change in an internal pressure of the cell case 220. That is, the vent 260 may seal the cell case 220 by maintaining a closed state during normal operation of the electrode assembly 210. The vent 260 may be opened as the internal pressure of the cell case 220 is increased to a set level or more due to overcharge, a fire occurrence, or the like. Emissions such as flames and gases from the inside of the cell case 220 may be discharged through the opened vent 260 to outside of the cell case 220.

An insulation member formed of an electrically insulating material such as rubber or synthetic resin may be installed between the electrode assembly 210 and the cap plate 231. The insulation member may include first and second lower insulation members 60 and 70.

One end of a separation member, which may be installed to face one side surface of the electrode assembly 210, may be installed between the insulation member and the cell terminal 232. The separation member may include first and second separation members 80 and 90. One ends of the first and second separation members 80 and 90, which may be installed to face one side surface of the electrode assembly 210, may be installed between the first and second lower insulation members 60 and 70 and the pair of cell terminals 232, respectively.

As a result, the pair of cell terminals 232 welded to the positive and negative electrode current collectors 240 and 250, may be coupled to the first and second lower insulation members 60 and 70 and one ends of the first and second separation members 80 and 90, respectively.

One or more battery cells 200 may be provided. Hereinafter, a case in which a plurality of battery cells 200 are provided will be described as an example, but the battery cells 200 are not limited thereto, and a single battery cell 200 may also be provided.

The plurality of battery cells 200 may be arranged in at least one or more rows inside the housing 100 in the longitudinal direction (X-axis direction based on FIG. 1) and the width direction (Y-axis direction based on FIG. 1) of the housing 100. In an example, as shown in FIGS. 1 and 2, the plurality of battery cells 200 may be disposed in eight rows in the longitudinal direction of the housing 100 and in two rows in the width direction of the housing 100. However, the arrangement form of the plurality of battery cells 200 is not limited to that shown in FIGS. 1 and 2, and may be variously changed in design.

The plurality of battery cells 200 may be electrically connected to each other by cell bus bars CB. Each cell bus bar CB may electrically connect a pair of battery cells 200 disposed adjacent to each other inside the housing 100. As an example, the cell bus bar CB may be made of an electrically conductive material such as aluminum, nickel, copper, or the like. Both sides of the cell bus bar CB may be electrically connected to the cell terminals 232 of the pair of adjacent battery cells 200. The cell bus bar CB may be connected to the cell terminal 232 by various types of bonding methods such as welding and bolting.

The cell bus bar CB may connect the pair of battery cells 200 disposed adjacent to each other in series or parallel. For example, the cell bus bars CB may connect the pairs of adjacent battery cells 200 in parallel by connecting the cell terminals 232, which have the same polarity, among the cell terminals 232 of the pairs of adjacent battery cells 200. Alternatively, the cell bus bar CB may connect the pairs of adjacent battery cells 200 in series by connecting the cell terminals 232, which have different polarities, among the cell terminals 232 of the pairs of adjacent battery cells 200,

A plurality of cell bus bars CB may be provided. The plurality of cell bus bars CB may individually connect different pairs of battery cells 200 in the housing in series or parallel. The plurality of cell bus bars CB may have various numbers and arrangement forms depending on the number of the battery cells 200, the structure of series and parallel arrangement between the battery cells 200, and the like

Each cell bus bar CB may be configured to include a conductive material including at least one of aluminum and an aluminum alloy.

The cell terminal 232, which functions as a positive electrode terminal of one of the plurality of battery cells 200, and the cell terminal 232, which functions as a negative electrode terminal of another battery cell 200, may not be connected to the cell bus bar CB.

A bus bar holder BH may be installed between the housing cover 120 and the battery cells 200. The bus bar holder BH may provide insulation between the battery cells 200 and the cell bus bar CB. The bus bar holder BH may support the cell bus bars CB inside the housing 100. The bus bar holder BH may have a plurality of openings to allow electrical connection between the cell terminals 232 of the battery cells 200 and the cell bus bars CB, while blocking electrical interference between the cell bus bars CB and other locations of the battery cell 200 other than the cell terminals 232.

Although not shown in the drawings, a sensing element (not shown) may be installed on the bus bar holder BH to collect temperature, current, and voltage status information of the battery cells 200 and control charging and discharging operations of the battery cells 200 based on the collected status information.

A module bus bar MB may be installed outside the housing 100 to electrically connect the adjacent battery modules 1 to each other. The first bus bar 300 and the second bus bar 400 may electrically connect the module bus bar MB to the battery cell 200 for any one battery module 1. That is, the first bus bar 300 and the second bus bar 400 may function as external connection terminals of the battery module 1. The first bus bar 300 and the second bus bar 400 may be integrally coupled to each other to form a single assembly.

The assembly of the first bus bar 300 and the second bus bar 400 may be provided in pairs. Each assembly of the first bus bar 300 and the second bus bar 400 may be individually connected to the cell terminal 232 that functions as the positive electrode terminal of one battery cell 200 and the cell terminal 232 that functions as the negative electrode terminal of another battery cell 200, and may function as a positive terminal or a negative terminal of the battery module 1.

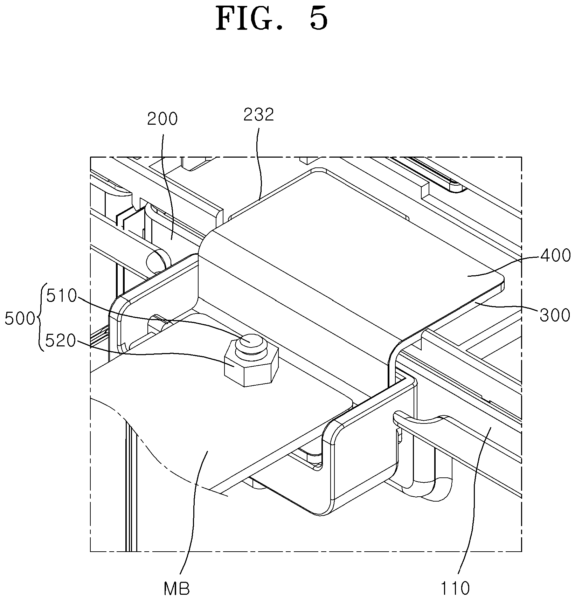

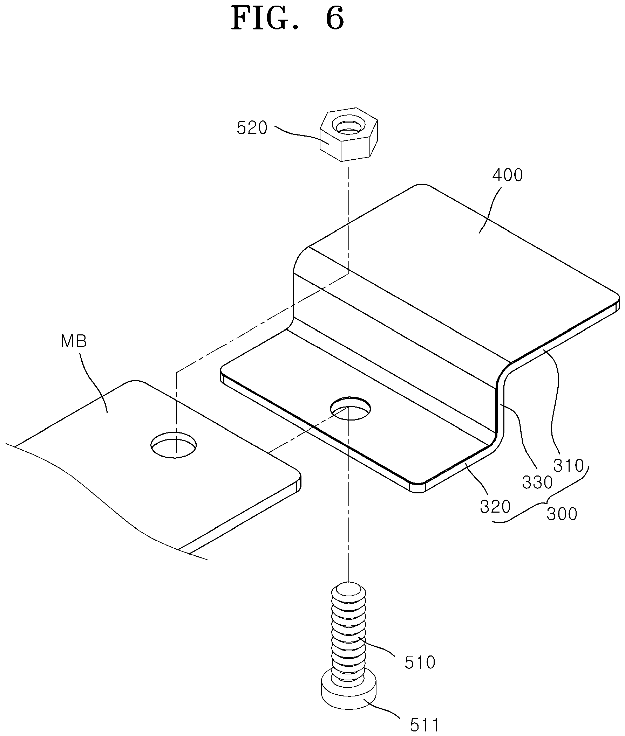

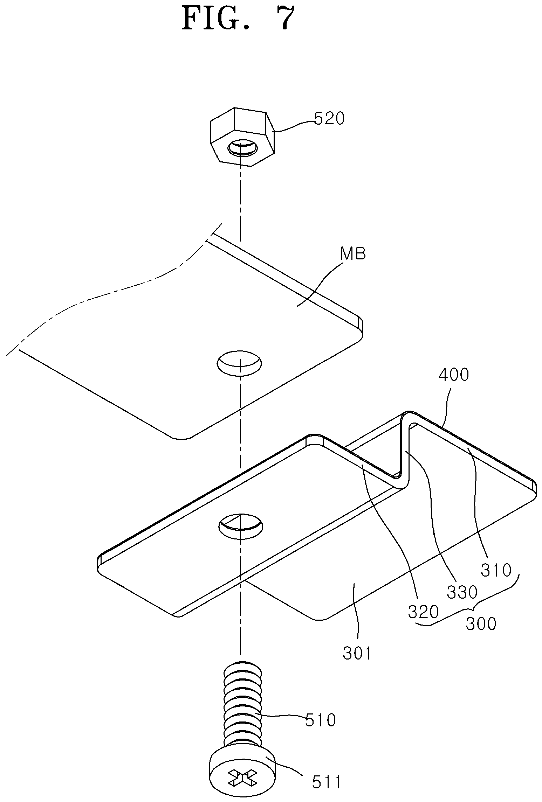

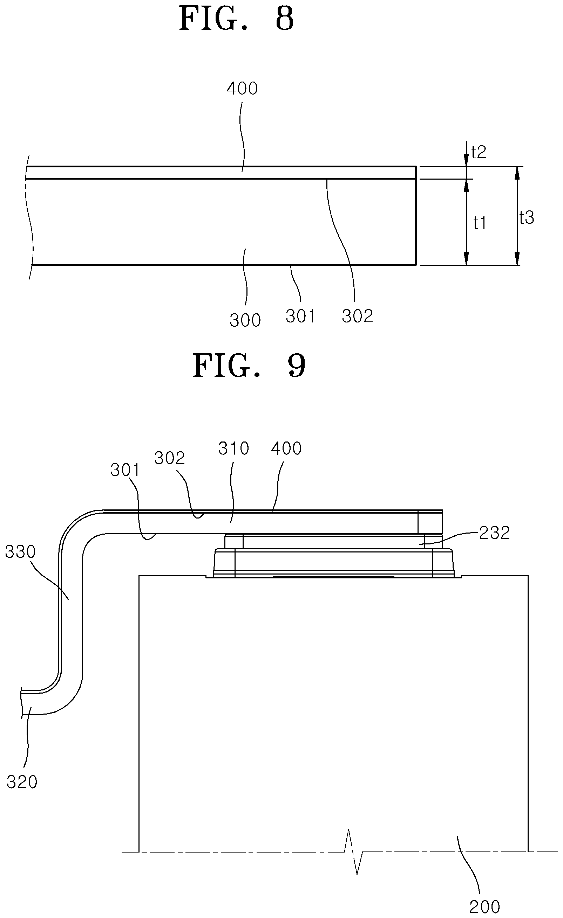

FIG. 5 is a perspective view schematically illustrating an installation state of the first bus bar and the second bus bar according to one embodiment of the present disclosure, and FIG. 6 is a perspective view schematically illustrating a configuration of the first bus bar and the second bus bar according to one embodiment of the present disclosure, FIG. 7 is a bottom perspective view schematically illustrating a configuration of the first bus bar and the second bus bar according to one embodiment of the present disclosure, and FIG. 8 is a cross-sectional view schematically illustrating a configuration of the first bus bar and the second bus bar according to one embodiment of the present disclosure.

Referring to FIGS. 1 to 8, the first bus bar 300 may be connected to the battery cell 200.

One side of the first bus bar 300 according to the present embodiment is disposed inside the housing 100, and the other side of the first bus bar 300 may protrude to the outside of the housing 100. As an example, the first bus bar 300 may be formed to include a bar with a first end portion 310 disposed inside the housing 100 and a second end portion 320 disposed outside the housing 100.

The second end portion 320 may be disposed at a lower position than the first end portion 310. Accordingly, a central portion 330 of the first bus bar 300 may extend downwardly from the first end portion 310 to the second end portion 320 in a bent shape. The second end portion 320 protruding to the outside of the housing 100 may be supported by being seated on a bracket BR or the like separately installed on the housing body 110.

The first bus bar 300 may include a first surface 301 and a second surface 302 disposed to be opposite to each other. As an example, the first surface 301 and the second surface 302 may be disposed perpendicular to a Z-axis direction based on FIG. 1. In this case, the first surface 301 and the second surface 302 may refer to upper and lower surfaces of the first bus bar 300, respectively.

FIG. 9 is a cross-sectional view schematically illustrating a connection structure between the first bus bar and the battery cell according to one embodiment of the present disclosure.

Referring to FIGS. 1 to 9, the first surface 301 located on a side of the first end portion 310 of bus bar 300 may be disposed to face the cell terminal 232 of any one battery cell 200 that is not connected to the cell bus bar CB. The first surface 301 located on the side of the first end portion 310 may be in contact with the cell terminal 232. The first bus bar 300 may be bonded to the cell terminal 232 by laser welding while the first surface 301 is in contact with the cell terminal 232. As the first bus bar 300 is directly connected to the cell terminal 232 without any additional components as described above, the overall size of the connection structure between the battery cell 200 and the first bus bar 300 may be reduced, and the degree of spatial freedom for the design of the battery module 1 may be improved.

The first bus bar 300 may be formed of an electrically conductive material. As an example, the first bus bar 300 may be formed of the same material as the cell terminal 232. That is, the first bus bar 300 may include a first conductive material including at least one of aluminum or an aluminum alloy. In this case, the first bus bar 300 may be formed entirely of the first conductive material. Alternatively, the first bus bar 300 may be formed so that only the portion directly in contact with the cell terminal 232 is formed of the first conductive material. As the first bus bar 300 and the cell terminal 232 are formed of the same material as described above, a high weld strength between the first bus bar 300 and the cell terminals 232 may be achieved.

The second bus bar 400 may be connected to the first bus bar 300 and the module bus bar MB. That is, the second bus bar 400 may function as a component that forms an electrical connection path between the module bus bar MB and the first bus bar 300. The second bus bar 400 may be formed to have the form of a sheet stacked on the second surface 302 of the first bus bar 300. An area of the second bus bar 400 may be formed to be the same as an area of the second surface 302. That is, the second bus bar 400 may be formed to completely cover the second surface 302 across the entire first end portion 310, second end portion 320, and center portion 330 of the first bus bar 300. The first bus bar 300 and the second bus bar 400 may be integrally bonded by various types of bonding methods such as thermal compression or welding.

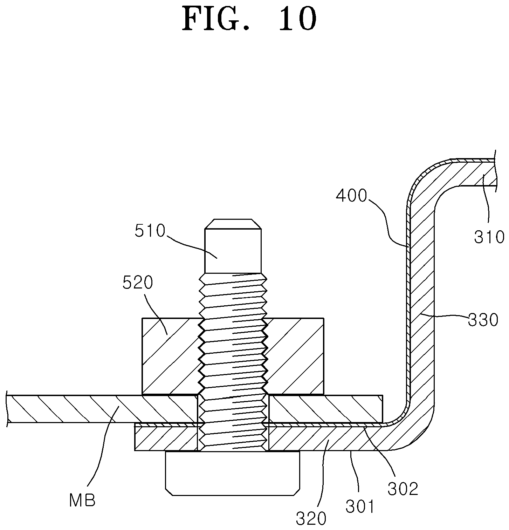

FIG. 10 is a cross-sectional view schematically illustrating a connection structure of the second bus bar and the module bus bar according to one embodiment of the present disclosure.

Referring to FIGS. 1 to 10, the module bus bar MB may face the second surface 302 of the first bus bar 300 with the second bus bar 400 interposed therebetween at a side of the second end portion 320 of the first bus bar 300. The module bus bar MB may be in direct contact with the second bus bar 400 by being seated on the second bus bar 400. The second bus bar 400 and the module bus bar MB may be connected to each other by a fixing member 500, which will be described below. Alternatively, the second bus bar 400 and the module bus bar MB may also be integrally connected by welding, thermocompression, or the like.

The second bus bar 400 may be formed of a conductive material so as to be electrically connected to the first bus bar 300 and the module bus bar MB. As an example, the second bus bar 400 may include a second conductive material different from the first conductive material. The module bus bar MB may be configured to include the second conductive material as in the second bus bar 400. The second conductive material may be a material having a relatively lower electrical resistivity than the first conductive material. Accordingly, the module bus bar MB and the second bus bar 400 may form a high-output and high-capacity electrically conductive path in units of the battery module 1. In addition, as the second bus bar 400 and the module bus bar MB are formed of the same material, a surface resistance in a contact area between the second bus bar 400 and the module bus bar MB may be lowered.

The melting point of the second conductive material may be higher than the melting point of the first conductive material. In this case, when laser welding is performed on the first bus bar 300 and the cell terminal 232, the second bus bar 400 disposed to cover the surface of the first bus bar 300, which is irradiated with laser light, may melt relatively slowly compared to the first bus bar 300. Accordingly, the second bus bar may prevent a molten metal area on the surface of the first bus bar 300 from expanding, and prevent a spattering phenomenon, in which melted materials scatter, from occurring on the surface of the first bus bar 300.

As an example, the second conductive material may include at least one of copper (Cu) and a copper alloy. In this case, the second bus bar 400 may be formed entirely of the second conductive material. Alternatively, the second bus bar 400 may be formed so that only the portion directly in contact with the module bus bar MB is formed of the second conductive material.

Referring to FIG. 8, a sum t3 of a thickness t1 of the first bus bar 300 and a thickness t2 of the second bus bar 400 may be greater than or equal to 1 mm and less than or equal to 3 mm to ensure sufficient weldability between the first bus bar 300 and the cell terminal 232. In that conext, the sum of a thickness of the first bus bar 300 and a thickness of the second bus bar 400 may be 1.00 mm to 3.00 mm, preferably 1.50 mm to 2.50 mm, most preferred 1.80 to 2.40 mm. Here, the thickness t1 of the first bus bar 300 and the thickness t2 of the second bus bar 400 may refer to thicknesses parallel to a direction perpendicular to the first surface 301 and the second surface 302, as shown in FIG. 8.

A ratio t2/t3 of the thickness t2 of the second bus bar 400 to the sum t3 of the thickness t1 of the first bus bar 300 and the thickness t2 of the second bus bar 400 may be greater than or equal to 0.025 and less than or equal to 0.2. When the ratio t2/t3 of the thickness t2 of the second bus bar 400 to the sum t3 of the thickness t1 of the first bus bar 300 and the thickness t2 of the second bus bar 400 is less than 0.025, there may be a problem in that electrical conductivity of the assembly of the first bus bar 300 and the second bus bar 400 becomes excessively low. When the ratio t2/t3 of the thickness t2 of the second bus bar 400 to the sum t3 of the thickness t1 of the first bus bar 300 and the thickness t2 of the second bus bar 400 is greater than 0.2, there may be a problem in that, when laser welding is performed on the first bus bar 300 and the cell terminal 232, a bonding strength of the first bus bar 300 and the cell terminal 232 is weakened since the melted materials of the second bus bar 400 penetrate to the boundary region of the first bus bar 300 and the cell terminal 232.

The thickness t2 of the second bus bar 400 may be greater than or equal to 0.05 mm. That is, even when the sum t3 of the thickness t1 of the first bus bar 300 and the thickness t2 of the second bus bar 400 is less than 2 mm, the thickness t2 of the second bus bar 400 may be formed to have a value greater than or equal to 0.05 mm. When the thickness t2 of the second bus bar 400 is less than 0.05 mm, the contact resistance between the module bus bar MB and the second bus bar 400 may be excessively increased, and the surface of the first bus bar 300 may be directly exposed to the outside, causing the module bus bar MB to be in direct contact with the first bus bar 300.

The battery module 1 according to the present embodiment may further include the fixing member 500. The fixing member 500 may fix the module bus bar MB to the second bus bar 400. That is, the fixing member 500 may function as a component that maintains the contact state between the module bus bar MB and the second bus bar 400 by imparting a fastening force. The fixing member 500 may include for example a screw as a first fixing member 510 and a corresponding nut as a second fixing member 520.

The fixing member 500 may include a first fixing member 510 and a second fixing member 520.

The first fixing member 510 may be disposed on the side of the second end portion 320 of the first bus bar 300, on which the first bus bar 300, the second bus bar 400, and the module bus bar MB are sequentially stacked. The first fixing member 510 may vertically pass through the first bus bar 300, the second bus bar 400, and the module bus bar MB in a stacking direction of the first bus bar 300, the second bus bar 400, and the module bus bar MB. As an example, the first fixing member 510 may have be a bolt having an outer circumferential surface on which threads are formed and one end portion on which a head 511 is formed. The other end portion of the first fixing member 510 may vertically pass through the first bus bar 300, the second bus bar 400, and the module bus bar MB, and protrude outward from the module bus bar MB.

The second fixing member 520 may be connected to the first fixing member 510 and may press the module bus bar MB toward the second bus bar 400. That is, the second fixing member 520 may function as a component that brings the module bus bar MB into close contact with the second bus bar 400 by a pressure generated by fastening with the first fixing member 510. As an example, the second fixing member 520 may be a nut having an inner circumferential surface on which threads are formed. The second fixing member 520 may be disposed to face the head 511 of the first fixing member 510 with the first bus bar 300, the second bus bar 400, and the module bus bar MB interposed therebetween. The inner circumferential surface of the second fixing member 520 may be screwed to an outer circumferential surface of the other end portion of the first fixing member 510, which protrudes outward from the module bus bar MB. The second fixing member 520 may be moved toward the head 511 or moved away from the head 511 depending on a direction of rotation thereof. As the second fixing member 520 is moved a set distance or more toward the head 511, the module bus bar MB may be firmly and tightly fixed to the second bus bar 400 by a fastening pressure acting between the second fixing member 520 and the head 511.

Hereinafter, a method of manufacturing a battery module according to one embodiment of the present disclosure will be described.

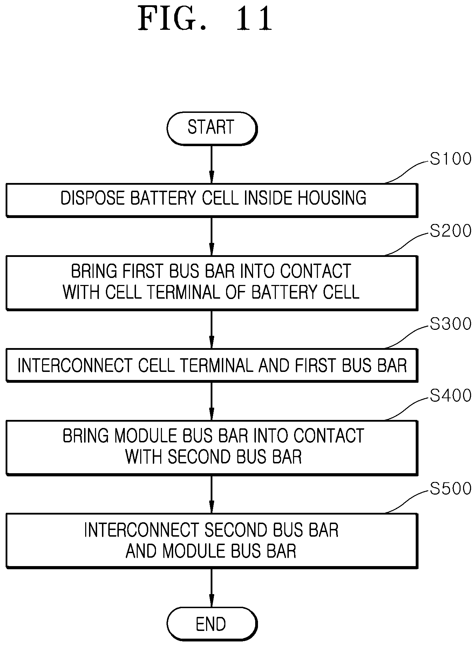

FIG. 11 is a flowchart schematically illustrating a sequence of the method of manufacturing a battery module according to one embodiment of the present disclosure.

Referring to FIG. 11, a battery cell 200 is disposed inside a housing 100 (step S100).

In step S100, the battery cell 200 may be disposed such that a cell terminal 232 faces an open side of a housing body 110.

When a plurality of battery cells 200 are provided in step S100, the plurality of battery cells 200 may be disposed in at least one or more rows inside the housing body 110 in the longitudinal direction of the housing 100 and the width direction of the housing 100.

After the battery cells 200 are disposed inside the housing 100, each of a plurality of cell bus bars CB may be connected to the cell terminals 232 of adjacent battery cells 200. Accordingly, the plurality of battery cells 200 may be electrically connected to each other.

After step S100, a first bus bar 300 is brought into contact with the cell terminal 232 of the battery cell 200 (step S200).

Step S200 is performed by a method of seating a first surface 301 of the first bus bar 300 on the cell terminal 232 in a state in which the first surface 301 is disposed to face the cell terminal 232.

In step S200, the first bus bar 300 may be in contact with the cell terminal 232 of the battery cell 200 in a state in which a second bus bar 400 is integrally stacked on a second surface 302 of the bus bar 300.

In step S200, the first bus bar 300 may be in contact with the cell terminal 232 of the battery cell 200 that is not connected to the cell bus bar CB.

After step S200, the cell terminal 232 of the battery cell 200 and the first bus bar 300 are connected to each other (step S300).

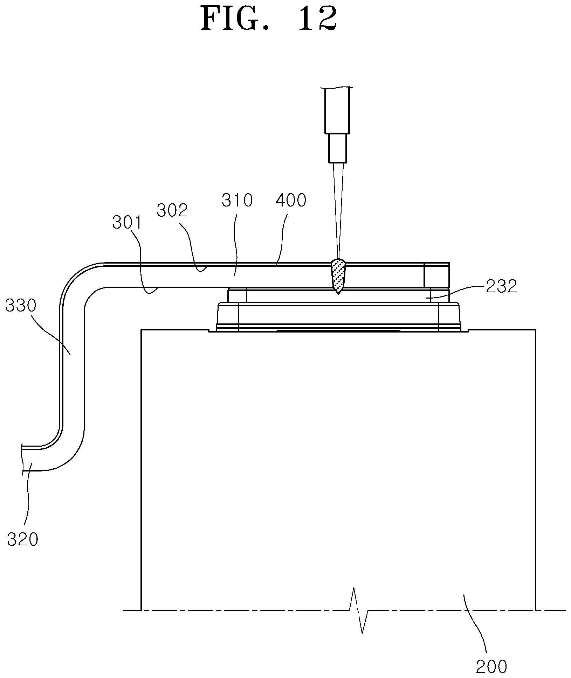

FIG. 12 is a view schematically illustrating a process of interconnecting the cell terminal and the first bus bar.

Referring to FIG. 12, step S300 may be performed by laser welding, which utilizes heat from a laser beam to melt and bond the first bus bar 300 and the cell terminal 232.

As an example, in step S300, the laser beam may be irradiated in a direction toward the first bus bar 300 from the second bus bar 400. That is, the laser beam may be irradiated onto the surface of the second bus bar 400 stacked on the second surface 302, which is located on the opposite side of the first surface 301 in contact with the cell terminal 232. In step S300, the laser beam may be irradiated onto the surface of the second bus bar 400 by various types of laser welders.

Heat generated by the laser beam may be transferred to the interface between the first bus bar 300 and the cell terminal 232 via the second bus bar 400 and the first bus bar 300.

At the interface between the first bus bar 300 and the cell terminal 232, the first bus bar 300 and the cell terminal 232 may be melted, mixed in a liquid state, and then hardened to a solid state to thereby be integrally bonded.

An output of the laser beam irradiated in step S300 may be greater than or equal to 3.4 kW and less than or equal to 4.6 kW. When the output of the laser beam is less than 3.4 kW, heat is not sufficiently transferred to a boundary region between the first bus bar 300 and the cell terminal 232, and thus the first bus bar 300 and the cell terminal 232 may not be bonded with sufficient strength. When the output of the laser beam is greater than 4.6 kW, pinholes may occur, or melted materials of the second bus bar 400 may invade the boundary region of the first bus bar 300 and the cell terminal 232.

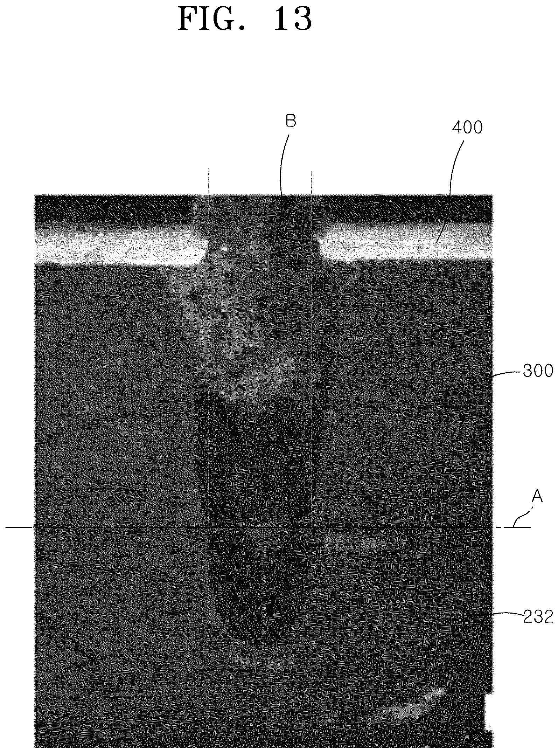

FIG. 13 is a view illustrating a welded state of the first bus bar and the cell terminal.

Referring to FIG. 13, it can be seen that due to the difference in melting point between the first bus bar 300 and the second bus bar 400, a molten metal area in a surface region of the first bus bar 300 may be prevented from being excessively increased and a spattering phenomenon may be prevented from occurring. In addition, it can be seen that melted materials B of the second bus bar 400 do not invade a boundary region A between the first bus bar 300 and the cell terminal 232. Further, it can be seen that the first bus bar 300 and the cell terminal 232, which are formed of the same material, are smoothly bonded to each other in the boundary region A between the first bus bar 300 and the cell terminal 232. In this case, the first bus bar 300 and the cell terminal 232 have a welding strength of 2.8 kN.

After step S300, a module bus bar MB is brought into contact with the second bus bar 400 (step S400).

Hereinafter, a case in which step S400 is performed after step S300 will be described as an example, but the present disclosure is not limited thereto, and step S400 may be performed before step S300 or simultaneously with step S300.

Step S400 may be performed by a method of seating the module bus bar MB on the second bus bar 400, which is stacked on the second end portion 320 of the first bus bar 300 located on the outside of the housing 100.

After step S400, the second bus bar 400 and the module bus bar MB are interconnected (step S500). Step S500 may be performed using a fixing member 500.

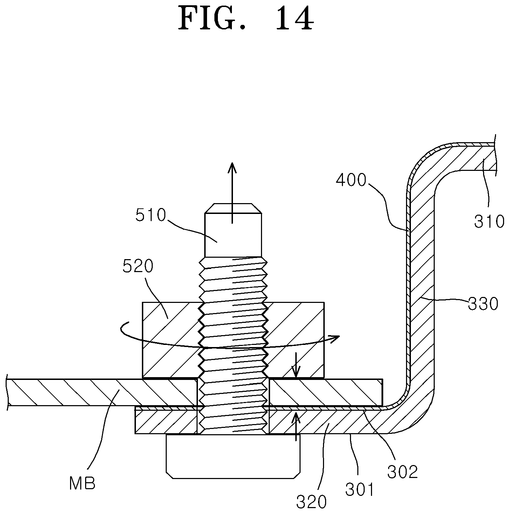

FIG. 14 is a view schematically illustrating a process of interconnecting the second bus bar and the module bus bar.

Referring to FIG. 14, in step S500, a first fixing member 510 may be inserted to pass through the first bus bar 300, the second bus bar 400, and the module bus bar MB in a stacking direction of the first bus bar 300, the second bus bar 400, and the module bus bar MB.

Thereafter, the second fixing member 520 is fastened to an end portion of the first fixing member 510 protruding outward from the module bus bar MB.

As an example, an inner circumferential surface of the second fixing member 520 may be screwed to an outer circumferential surface of the first fixing member 510.

As the second fixing member 520 is rotated in one direction, the second fixing member 520 may be moved toward the module bus bar MB. As the second fixing member 520 is moved more than a set distance toward the module bus bar MB, the second fixing member 520 may be brought into contact with the module bus bar MB and press the module bus bar MB toward the second bus bar 400.

According to the present disclosure, the stability of mechanical and electrical connections can be ensured by configuring components that provide an electrical connection between battery cells inside a battery module and module bus bars outside the battery module using different materials.

According to the present disclosure, a first bus bar is directly connected to a cell terminal without any additional components, so that the overall size of a connection structure between a battery cell and the first bus bar can be reduced, and the degree of spatial freedom for the design of a battery module can be secured.

According to the present disclosure, a second bus bar is formed to cover the entire surface of a first bus bar and made of a material whose melting point is higher than a melting point of the first bus bar, which can prevent a molten metal area from increasing during a welding process between the first bus bar and a cell terminal, and prevent a spattering phenomenon from occurring.

According to the present disclosure, a thickness of a second bus bar satisfies a set range condition, so that melted materials of the second bus bar can be prevented from penetrating into a boundary region between a first bus bar and a cell terminal during a welding process of the first bus bar and the cell terminal, thereby further improving welding quality.

According to the present disclosure, a thickness of a second bus bar satisfies a set range condition, so that contact resistance between the second bus bar and a module bus bar can be lowered and stable electrical conduction performance can be secured.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A battery module (1) comprising:
a housing (100);
a module bus bar (MB);
a battery cell (200) disposed inside the housing (100);
a first bus bar (300) connected to the battery cell (200) and comprising a first conductive material; and
a second bus bar (400) connected to the first bus bar (300) and connected to the module bus bar (MB), the second bus bar (400) comprising a second conductive material that is different from the first conductive material.

2. The battery module (1) as claimed in claim 1, wherein a melting point of the second conductive material is higher than a melting point of the first conductive material.

3. The battery module (1) as claimed in claims 1 or 2, wherein an electrical resistivity of the second conductive material is lower than an electrical resistivity of the first conductive material.

4. The battery module (1) as claimed in at least one of the preceding claims, wherein the first conductive material comprises aluminum (Al), and the second conductive material comprises copper (Cu).

5. The battery module (1) as claimed in at least one of the preceding claims, wherein a first side of the first bus bar (300) is disposed inside the housing (100), and a second side of the first bus bar (300) protrudes outside of the housing (100).

6. The battery module (1) as claimed in at least one of the preceding claims, wherein the first bus bar (300) comprises:
a first surface (301) in contact with a cell terminal (232) of the battery cell (200); and
a second surface (302) opposite to the first surface (301), and
wherein the second bus bar (400) is stacked on the second surface (302) of the first bus bar (300).

7. The battery module (1) as claimed in claim 6, wherein a sum of a thickness of the first bus bar (300) and a thickness of the second bus bar (400) is greater than or equal to 1 mm and less than or equal to 3 mm.

8. The battery module (1) as claimed in claims 6 or 7, wherein a ratio of a thickness of the second bus bar (400) to a sum of a thickness of the first bus bar (300) and the thickness of the second bus bar (400) is greater than or equal to 0.025 and less than or equal to 0.2.

9. The battery module (1) as claimed in claims 7 or 8, wherein the thickness of the second bus bar (400) is greater than or equal to 0.05 mm.

10. The battery module (1) as claimed in at least one of the preceding claims, wherein the module bus bar (MB) is in contact with the second bus bar (400).

11. The battery module (1) as claimed in at least one of the preceding claims, further comprising a fixing member (500) fixing the module bus bar (MB) to the second bus bar (400).

12. The battery module (1) as claimed in claim 11, wherein the fixing member (500) comprises:
a first fixing member (510) passing through the first bus bar (300), the second bus bar (400), and the module bus bar; and
a second fixing member (520) connected to the first fixing member (510) and configured to press the module bus bar toward the second bus bar (400).

13. A method of manufacturing a battery module (1), the method comprising:
disposing a battery cell (200) inside a housing (100);
bringing a first bus bar (300) into contact with a cell terminal (232) of the battery cell (200);
connecting the cell terminal (232) and the first bus bar (300);
bringing a module bus bar (MB) into contact with a second bus bar (400) stacked on the first bus bar (300); and
connecting the second bus bar (400) and the module bus bar (MB).

14. The method as claimed in claim 13, wherein the cell terminal (232) is connected to the first bus bar (300) by laser welding.

15. The method as claimed in claim 14, wherein in the connecting of the cell terminal (232) and the first bus bar (300), a laser beam is irradiated in a direction toward the first bus bar (300) from the second bus bar (400).
